# FASCICULE DE BREVET EUROPEEN

(11) **EP 4 087 079 B1**
(45) Date de publication et mention de la délivrance du brevet: **03.01.2024**
(21) Numéro de dépôt: 22171719.2
(22) Date de dépôt: 05.05.2022
(51) Int. Cl.: H02J 1/00, H02J 3/32, H02J 7/14, H02J 7/34

(54) **PROCÉDÉ DE GESTION DE FONCTIONNEMENT D'UN SYSTÈME D'ALIMENTATION ÉLECTRIQUE D'AÉRONEF COMPRENANT AU MOINS UN ENSEMBLE DE STOCKAGE D'ÉNERGIE ÉLECTRIQUE**
VERFAHREN ZUR STEUERUNG DES BETRIEBS EINES STROMVERSORGUNGSSYSTEMS FÜR EIN LUFTFAHRZEUG, DAS MINDESTENS EINE EINHEIT ZUR SPEICHERUNG VON ELEKTRISCHER ENERGIE UMFASST
METHOD FOR MANAGING THE OPERATION OF AN ELECTRICAL POWER SUPPLY SYSTEM FOR AN AIRCRAFT COMPRISING AT LEAST ONE ASSEMBLY FOR STORING ELECTRICAL ENERGY

(30) Priorité: 07.05.2021 FR 2104836
(43) Date de publication de la demande: 09.11.2022
(73) Titulaire: THALES, 92400 Courbevoie (FR)
(72) Inventeur: LAGARDE, Alexandre, 78400 CHATOU (FR); DEVAUTOUR, Joël, 78400 CHATOU (FR)
(74) Mandataire: Atout PI Laplace

(56) Documents cités:
- EP-A1- 3 588 729
- EP-A1- 3 595 118
- EP-A2- 2 727 838
- FR-A1- 2 911 698
- FR-A1- 2 952 130
- FR-A1- 2 976 558
- US-A1- 2015 183 385

## Description

L'invention porte sur un procédé de gestion de fonctionnement d'un système d'alimentation électrique d'aéronef comprenant au moins un ensemble de stockage d'énergie électrique.

L'industrie aéronautique est confrontée à la controverse dans l'opinion publique concernant le réchauffement climatique. Même si elle ne représente que 3% des émissions globales de CO2, elle est l'emblème du transport polluant. L'aéronautique se doit de mettre en place des stratégies de réduction des émissions comme cela est déjà implémenté dans le transport routier ou maritime. La majorité des émissions est liée à la propulsion, et donc à la consommation des réacteurs. L'industrie aéronautique doit trouver des solutions permettant de réduire les émissions.

Il est en outre constaté, sur les réacteurs des avions, des instabilités sur des phases transitoires (accélérations, décélérations). Ces instabilités sont accentuées par le prélèvement important d'énergie électrique sur l'étage haute pression des réacteurs.

Une voie de réduction des émissions est l'intégration d'énergies propres dans le réseau de distribution d'avion, comme l'hydrogène. Si l'hydrogène est utilisé sur un générateur auxiliaire, les avions devront accepter cette source supplémentaire en parallèle des sources existantes.

La gestion des sources actuelles d'énergie implémentée sur les avions à réseau de bord HVAC à fréquence variables n'accepte qu'une source par sous-réseau, interdisant la répartition intelligente de charges entre générateurs et provoquant des interruptions d'alimentation du sous-réseau lors du basculement d'un générateur à l'autre.

Le démarrage électrique des moteurs thermiques (réacteurs ou turbopropulseurs) est encore peu répandu, et les convertisseurs électriques ne sont utilisés que lors du démarrage. Malgré la réduction du poids du système à air traditionnellement utilisé pour le démarrage et les possibilités de redémarrage de moteurs thermiques en altitude permis, la masse des convertisseurs électriques nécessaires à son implémentation, transportés en permanence, est un frein à son utilisation.

Sur les systèmes de génération d'énergie électrique des avions, la régulation de tension du réseau de bord est une fonction critique. La non-réalisation de cette fonction pouvant conduire à une surtension pouvant se propager à tous les équipements en fait un événement redouté par les avionneurs. La montée en puissance de ces systèmes de génération d'énergie électrique, combinée à l'ajout de la fonction de démarrage électrique des moteurs thermiques d'avions conduit à une gestion très compliquée de ces surtensions. Sur les avions récents, des systèmes de gestion/protection des surtensions ont été nécessaires afin de pouvoir tenir les gabarits des dernières normes en vigueur.

Lors des phases de descente d'avions, le système de propulsion est utilisé pour alimenter en énergie les charges non propulsives de l'appareil, comme les systèmes hydrauliques et électriques. Dans cette phase le besoin en énergie propulsive est très faible. L'entrainement thermique fonctionne à puissance très faible et présente dans ce cas des rendements très faibles, de l'ordre de 10%. L'alimentation des charges non propulsives consomme alors beaucoup de carburant pour peu de puissance délivrée.

Avec le développement de batteries pour le stockage d'énergie sur les aéronefs, permettant la récupération d'énergie, un système de gestion de la charge de la batterie est nécessaire. Dans le cas où les batteries sont à un niveau de charge élevé, il n'est plus possible de récupérer l'énergie, forçant à maintenir des systèmes de dissipation d'énergie.

La réduction des émissions est actuellement obtenue par le développement de réacteurs à fort taux de dilution ou "Ultra High Bypass Ratio" en langue anglaise, augmentant l'instabilité des réacteurs dans certaines phases d'utilisation.

Pour gérer ces instabilités, comme illustré par le document FR 3067874 qui décrit une solution permettant le délestage de réacteurs à fort taux de dilution, grâce à un organe superviseur des générations électriques, les réacteurs sont dimensionnés avec une marge permettant de ne pas entrer dans ces zones d'instabilité. Cette marge conduit à réduire l'optimisation de consommation de carburant. Ainsi, sur des phases de vols majoritaires, le réacteur n'est pas utilisé à son point de fonctionnement optimum (rendement), réduisant le gain d'émissions escompté.

On identifiera enfin les documents de brevet FR2976558 A1, US2015/183385A1 et FR2952130A1. Particulièrement le document FR2976558A1 décrit le préambule de la revendication 1.

Un but de l'invention est de remédier aux problèmes précédemment cités.

Il est proposé, selon un aspect de l'invention, un procédé de gestion de fonctionnement d'un système d'alimentation électrique d'aéronef comprenant au moins un ensemble de stockage d'énergie électrique à alimenter en courant continu connecté à un bus d'alimentation en courant continu, au moins une machine électrique source de courant alternatif par prélèvement mécanique sur un système d'entrainement (comme une turbine ou un turbopropulseur ou une turbine à gaz ou un moteur à piston ou une hélice de turbine à air dynamique) connecté à une unité de commande de génération de courant, un convertisseur bidirectionnel configuré pour convertir une tension continue en tension alternative, et un module de commande du convertisseur, le procédé de gestion élaborant une commande du convertisseur à partir de la position angulaire de la machine électrique, de l'intensité du courant électrique délivré par la machine électrique, et de la tension électrique de sortie du convertisseur), les éléments du système étant connectés par des connexions électriques. L'élaboration de la commande du convertisseur comprend les étapes suivantes:
- décomposition de l'intensité électrique du courant électrique délivré par la machine électrique, en une intensité active de la machine électrique et une intensité réactive de la machine électrique ;
- limitation de l'intensité active et de l'intensité réactive de sorte que l'intensité correspondante du courant électrique délivré par la machine électrique soit inférieure à un seuil, par élaboration d'une consigne de limitation de l'intensité active et d'une consigne de limitation de l'intensité réactive ;
- gestion de variation rapide de l'intensité du courant électrique délivré par la machine électrique, correspondant à des variations dont la constante de temps est supérieure à la constante de temps d'une fonction de transfert de type passe-haut, par élaboration d'une consigne de variation de l'intensité active et d'une consigne de variation de l'intensité réactive ;
- élaboration d'une consigne d'intensité réactive par sommation de la consigne de limitation de l'intensité réactive et de la consigne de variation de l'intensité réactive ;
- élaboration d'une consigne d'intensité active par sommation de la consigne de limitation de l'intensité active et de la consigne de variation de l'intensité active ; et
- génération d'une commande du convertisseur à partir de la consigne d'intensité active, de la consigne d'intensité réactive, de la position angulaire de la machine électrique, et de la tension électrique de sortie du convertisseur.

Un tel procédé permet de pouvoir piloter de façon déterministe les transferts de puissance active et réactive entre le réseau électrique alternatif AC, le stockage d'énergie et le générateur comprenant la machine électrique et le système d'entraînement. Le procédé, grâce à sa gestion précise des flux de puissance, permet d'optimiser l'utilisation de la machine électrique, du convertisseur et du stockage d'énergie, et notamment de :
- réduire le dimensionnement de la machine électrique, en optimisant les composantes actives et réactives de ses courants de charge ;
- supporter le système d'entraînement mécanique dans des phases d'instabilité en fournissant l'énergie du réseau électrique à partir du stockage d'énergie afin d'arrêter de prélever l'énergie électrique sur le système d'entraînement mécanique ;
- transmettre de la puissance provenant du stockage d'énergie vers le système d'entraînement mécanique afin d'hybrider la propulsion ;
- aider à la régulation de la tension réseau sur des transitoires rapides de charge, facilitant la tenue des gabarits des normes aéronautiques ;
- aider à l'équilibrage des tensions réseau ;
- permettre des transferts de sources électriques sans discontinuité d'alimentation ; et
- aider à la maîtrise de l'état thermique des différents composants (machine électrique, l'ensemble de stockage d'énergie électrique, convertisseur, ...)

Un tel procédé d'élaboration de la commande du convertisseur permet de dissocier la gestion des composantes actives et réactives des courants de machine électrique, permettant d'optimiser le dimensionnement de la machine électrique, qui permet d'avoir un comportement très déterministe du convertisseur afin de supporter le réseau électrique.

Selon un mode de mise en oeuvre, le seuil de limitation de courant de la machine électrique est constant si la température de la machine électrique est inférieure ou égale à une température de seuil à partir de laquelle la machine électrique ne peut plus fonctionner à puissance nominale, et décroissant (par exemple linéairement), entre la température de seuil et une température maximale supportée par la machine électrique.

Ainsi, la limitation de courant permet de supporter la machine électrique en limitant la puissance prélevée sur l'ensemble de stockage d'énergie électrique au minimum nécessaire en fonction de la température de la machine électrique. Cela permet de réduire la capacité de l'ensemble de stockage d'énergie électrique, limitera la sollicitation du convertisseur améliorant sa durée de vie.

Dans un mode de mise en oeuvre, la consigne d'intensité active comprend également la sommation d'une consigne d'intensité active de support au système d'entrainement de propulsion élaborée à partir d'une consigne de support au système d'entrainement.

Ainsi, le convertisseur et le système de stockage peuvent être utilisés pour fournir de la puissance afin d'alimenter le réseau électrique déchargeant la machine électrique et donc réduisant le couple prélevé sur le système d'entrainement. Le système d'entrainement ainsi délesté aura plus de puissance disponible pour la propulsion. Ce phénomène pourra être avantageusement utilisé pour réduire le dimensionnement du système d'entrainement et donc sa masse.

Le convertisseur et l'ensemble de stockage peuvent être utilisés pour fournir de la puissance afin d'alimenter le réseau électrique et d'entrainer la machine électrique. La machine électrique passe dans ce cas de générateur électrique à moteur électrique. Le moteur électrique aide alors le système d'entraînement à augmenter sa capacité de propulsion, ou l'aide à se relancer lors de transitoires. Ce phénomène peut être avantageusement utilisé pour réduire le dimensionnement du système d'entraînement et donc sa masse.

Selon un mode de mise en oeuvre, on affecte à la consigne d'intensité active la valeur d'une consigne d'intensité de recharge de l'ensemble de stockage d'énergie électrique.

Ainsi, le convertisseur peut utiliser la capacité du générateur électrique non utilisée pour le réseau de bord pour recharger l'ensemble de stockage d'énergie, celui-ci étant réversible. Le principe proposé a l'avantage de laisser la priorité aux fonctions de support réseau et support au système d'entrainement, en rechargeant la réserve d'énergie sur les périodes pendant lesquelles aucun support n'est nécessaire.

Dans un mode de mise en oeuvre, ladite affectation a lieu lorsque la sommation pour élaborer la consigne d'intensité active donne une valeur nulle.

Ainsi, l'ensemble de stockage d'énergie n'est rechargée que si aucune demande de soutien en courant actif (réseau ou générateur) n'est présente.

Selon un mode de mise en oeuvre, la consigne de recharge est élaborée à partir d'une consigne de recharge de l'ensemble de stockage d'énergie électrique et/ou d'un niveau de charge de l'ensemble de stockage d'énergie électrique.

Ainsi, dans certains cas, le module de commande peut décider seul du niveau de puissance de recharge de l'ensemble de stockage en fonction de son niveau de stockage, il agit alors en gestionnaire de l'énergie de stockage. Dans d'autres cas, un module de commande de niveau supérieur peut exister au niveau de l'aéronef, et le convertisseur suit alors une consigne externe de ce module de niveau supérieur pour la recharge.

Par exemple, l'élaboration de la consigne de recharge est configurée pour demander une recharge lorsque le niveau de charge est inférieur à un seuil.

Dans un mode de mise en oeuvre, l'élaboration de la consigne de recharge dépend de paramètres de fonctionnement de l'ensemble de stockage d'énergie électrique, par exemple comprenant la température de l'ensemble de stockage d'énergie électrique.

Ainsi, après des supports importants au réseau ou au système d'entrainement, en plus d'une gestion de l'énergie de l'ensemble de stockage, la gestion du convertisseur permet avantageusement de pouvoir laisser refroidir les équipements en limitant le niveau de recharge afin qu'ils soient de nouveau en pleine capacité d'un point de vue thermique le plus rapidement possible.

Selon un autre aspect de l'invention, il est également proposé un système de gestion de fonctionnement d'un système d'alimentation électrique d'aéronef comprenant au moins un ensemble de stockage d'énergie électrique à alimenter en courant continu connectée à un bus d'alimentation en courant continu, au moins une machine électrique source de courant alternatif par prélèvement mécanique sur un système d'entrainement connecté à une unité de commande de génération de courant, un convertisseur bidirectionnel configuré pour convertir une tension continue en tension alternative, et un module de commande du convertisseur configuré pour élaborer une commande du convertisseur à partir de la position angulaire de la machine électrique, de l'intensité du courant électrique délivré par la machine électrique, et de la tension électrique de sortie du convertisseur.

Selon un mode de réalisation, le système d'entrainement comprend une turbine ou un turbopropulseur ou une turbine à gaz ou un moteur à piston ou une hélice de turbine à air dynamique.

L'invention sera mieux comprise à l'étude de quelques modes de réalisation décrits à titre d'exemples nullement limitatifs et illustrés par les dessins annexés sur lequel:
[Fig.1] illustre schématiquement un procédé e de gestion de fonctionnement d'un système d'alimentation électrique d'aéronef comprenant au moins un ensemble de stockage d'énergie électrique, selon un aspect de l'invention ;
[Fig.2] illustre schématiquement un exemple d'utilisation du procédé de la [Fig.1], selon un aspect de l'invention ;
[Fig.3] illustre schématiquement un exemple d'utilisation du procédé de la [Fig.1], selon un aspect de l'invention ;
[Fig.4] illustre schématiquement un exemple d'utilisation du procédé de la [Fig.1], selon un aspect de l'invention ; et
[Fig.5] illustre schématiquement un exemple d'utilisation du procédé de la [Fig.1], selon un aspect de l'invention.

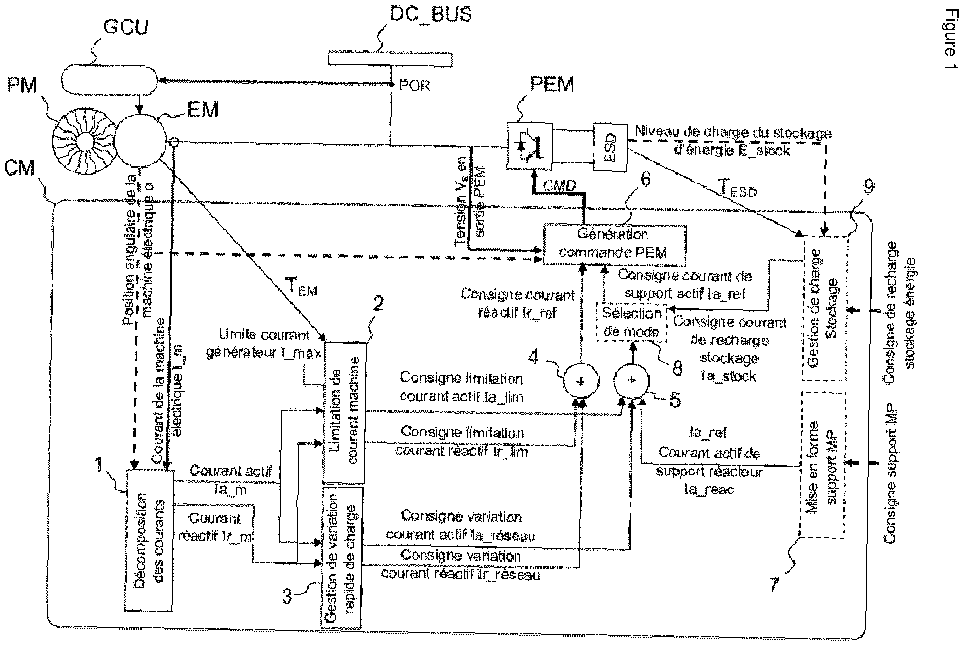

Sur la [Fig.1] est illustré un procédé de gestion de fonctionnement d'un système d'alimentation électrique d'aéronef comprenant au moins un ensemble de stockage d'énergie électrique ESD à alimenter en courant alternatif, selon un aspect de l'invention.

Sur les exemples décrits, le système d'entrainement représenté est un moteur de propulsion PM (turbine ou turbopropulseur), mais, en variante, l'invention s'applique de la même manière à une turbine à gaz, un moteur à piston, une hélice de turbine à air dynamique.

L'ensemble de stockage d'énergie électrique ESD peut comprendre au moins une batterie électrique, et/ou au moins une capacité, et/ou au moins une super-capacité, et/ou au moins un volant d'inertie, et/ou au moins une pile à combustible, et/ou au moins un turbo générateur autonome.

L'ensemble de stockage d'énergie électrique ESD connecté à un bus d'alimentation en courant continu DC_BUS.

Le système d'alimentation électrique comprend au moins une machine électrique EM source de courant alternatif par prélèvement mécanique sur un moteur de propulsion PM connectée à une unité de commande de génération de courant GCU.

Le système d'alimentation électrique comprend un convertisseur PEM en courant alternatif configuré pour convertir de manière réversible une tension continue de l'ensemble de stockage d'énergie électrique ESD en tension alternative et un module de commande CM du convertisseur PEM. Les différentes étapes du procédés sont mises en oeuvre par le module de commande CM de manière logicielle et/ou hardware.

Le procédé de gestion du système d'alimentation électrique élabore une commande du convertisseur PEM à partir de la position angulaire θ de la machine électrique EM, de l'intensité I_m du courant électrique délivré par la machine électrique EM, et de la tension électrique Vs de sortie du convertisseur PEM.

l'élaboration de la commande (CMD) du convertisseur (PEM) comprend les étapes suivantes:
- décomposition 1 de l'intensité électrique I_m du courant électrique délivré par la machine électrique EM, au moyen de la position angulaire θ de la machine électrique EM, en une intensité active la_m de la machine électrique ME et une intensité réactive Ir_m de la machine électrique ME ;
- limitation 2 de l'intensité active la_m et de l'intensité réactive Ir_m de sorte que l'intensité correspondante I_m du courant électrique délivré par la machine électrique EM soit inférieure à un seuil I_max, par élaboration d'une consigne de limitation Ia_lim de l'intensité active la_m et d'une consigne de limitation Ir_lim de l'intensité réactive Ir_m ;
- gestion 3 de variation rapide de l'intensité I_m du courant électrique délivré par la machine électrique EM, correspondant à des variations dont la constante de temps est supérieure à la constante de temps d'une fonction de transfert de type passe-haut, par élaboration d'une consigne de variation Ia_réseau de l'intensité active la_m et d'une consigne de variation Ir_réseau de l'intensité réactive Ir_m ;

- élaboration 4d'une consigne Ir_ref d'intensité réactive Ir_m par sommation de la consigne de limitation Ir_lim de l'intensité réactive et de la consigne de variation Ir_réseau de l'intensité réactive ;
- élaboration 5 d'une consigne la_ref d'intensité active la_m par sommation de la consigne de limitation Ia_lim de l'intensité active et de la consigne de variation Ia_réseau de l'intensité active ; et
- génération 6 d'une commande du convertisseur PEM à partir de la consigne la_ref d'intensité active, de la consigne Ir_ref d'intensité réactive, de la position angulaire θ de la machine électrique EM, et de la tension électrique de sortie du convertisseur PEM.

La décomposition 1 des courants analyse des courants machine et calcule ses composantes actives et réactives grâce à la position angulaire de la machine. La position angulaire pourra être soit mesurée, soit estimée directement par le module de commande CM. Connaissant l'angle de la machine et ses trois courants, les courants peuvent être décomposés mathématiquement entre une composante active et une réactive par la transformation dqo :

Une transformée dqo correspond à :
Id =racine(2/3)*( cos(Theta)*ia + cos(Theta-2*pi()/3)*ib + cos(Theta+2*pi()/3)*ic )
Iq = racine(2/3)*( sin(Theta)*ia + sin (Theta-2*pi()/3)*ib + sin (Theta+2*pi()/3)*ic )
Io = racine(2/3)*( racine(2)/2*ia + racine(2)/2*ib + racine(2)/2*ic )
la Ib et le étant les trois courants machine instantanés
Thêta étant la position angulaire de la machine
Id étant le courant d'axe d de la machine électrique, correspondant au courant réactif
Iq étant le courant d'axe q de la machine électrique, correspondant au courant actif
Io étant le courant homopolaire de la machine

La limitation 2 permet d'assurer que le courant de la machine électrique EM est inférieur au courant maximum autorisé par conception thermique ou mécanique de la machine électrique EM. Quand celui-ci dépasse le niveau maximum, par exemple le courant nominal de la machine électrique EM, une consigne d'injection de courant est envoyée au convertisseur PEM. Le PEM injecte alors un courant permettant de maintenir le courant réel de la machine électrique EM à son maximum admissible. La limitation 2 permet de pouvoir limiter le courant machine prioritairement soit par le courant actif soit par le courant réactif.

Un exemple avantageux d'application consiste à prioriser la limitation du courant de la machine électrique EM par le courant réactif, le convertisseur PEM ne décharge pas l'ensemble de stockage d'énergie électrique ESD, seul le courant actif décharge l'ensemble de stockage d'énergie électrique ESD.

Un autre exemple avantageux consiste en la possibilité de choisir le type de support, actif ou réactif, en fonction du niveau de charge de l'ensemble de stockage d'énergie électrique ESD afin de préserver au maximum la réserve et d'optimiser son dimensionnement.

La gestion 3 analyse les variations rapides du courant de la machine électrique EM, par exemple inférieur à 2.5ms, et lisse la charge en injectant ou prélevant du courant par le convertisseur PEM. En fonction du type de courant, actif ou réactif, la gestion 3 agit le sur courant ayant le meilleur effet sur le lissage de la charge et son impact sur les variations de tensions du réseau. Il est appliqué une fonction de transfert dit passe-haut, qui permet de ne récupérer que les variations dont la constante de temps est supérieure à celle de la fonction de transfert.

La génération de commande du convertisseur PEM utilise les consignes de courant actif et de courant réactif dans le repère de la machine électrique, connus grâce à sa position angulaire, pour piloter les interrupteurs de puissance par une modulation de largeur d'impulsion. Cette position angulaire peut être connue soit par mesure, soit par estimation à partir des courants de la machine électrique EM mesurés et de la tension en sortie du PEM.

La consigne la_ref d'intensité active peut également comprendre la sommation 5 d'une consigne d'intensité active de support moteur de propulsion la_reac élaborée 7 à partir d'une consigne de support au moteur de propulsion PM.

Il est possible d'affecter 8, par sélection de mode, à la consigne la_ref d'intensité active la valeur d'une consigne Ia_stock d'intensité de recharge de l'ensemble de stockage d'énergie électrique ESD, par exemple lorsque la sommation pour élaborer la consigne la_ref d'intensité active donne une valeur nulle.

Cette sélection de mode 8 permet de prioriser les supports (support moteur de propulsion PM, limitation de courant, gestion de variation) par rapport à la recharge de l'ensemble de stockage d'énergie électrique ESD. Les supports sont généralement de faible durée (< 10s) et les charges plutôt de longue durée (> à la minute). La recharge est effectuée lorsque qu'aucun support n'est nécessaire (>90% du temps). Cette affectation ou sélection de mode 8 s'assure que dès qu'un support en courant actif est nécessaire il est prioritaire sur la recharge de l'ensemble de stockage d'énergie électrique ESD.

La consigne Ia_stock de recharge peut être élaborée 9 à partir d'une consigne de recharge de l'ensemble de stockage d'énergie électrique ESD et/ou d'un niveau de charge E_stock de l'ensemble de stockage d'énergie électrique ESD.

La gestion de charge de stockage d'énergie 9 de l'ensemble de stockage d'énergie électrique ESD assure que la réserve d'énergie nécessaire aux différents supports reste à un niveau de charge suffisant. Il est demandé une recharge du stockage si le niveau d'énergie est inférieur à un seuil prédéfini, ou à un niveau de charge optimum à tout moment en fonction de l'état du système (niveau de charge, température, ...). Alternativement il est possible de retransmettre la demande d'un système de gestion d'énergie plus global si la réserve est utilisée aussi pour des fonctions externes. Alternativement pour des systèmes de stockage de technologies complexes, il est possible de retransmettre la demande d'un système de gestion de stockage (tel qu'un BMS - Battery anagement System - pour batteries lithium-ion).

La présente invention permet donc de gérer efficacement les cas décrits par les figures qui suivent.

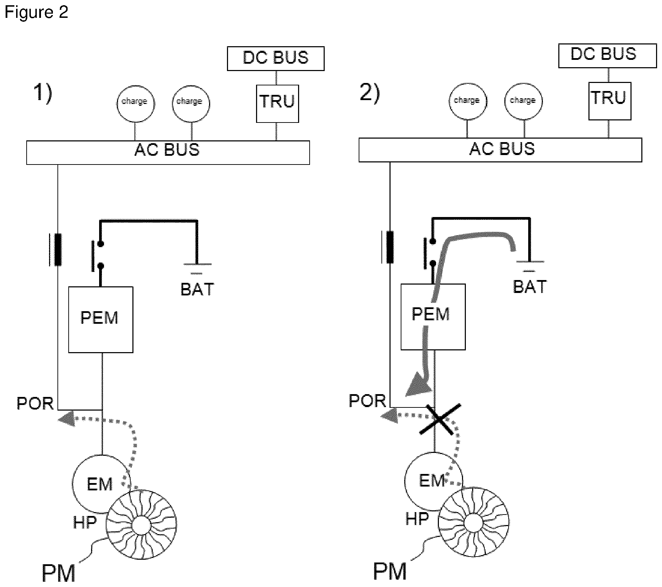

La [Fig.2] illustre l'utilisation de l'invention pour supporter le réseau électrique d'un avion pour délester le moteur de propulsion PM, conduisant à une réduction de la puissance pic nécessaire pour le moteur de propulsion PM, réduisant le besoin de marge en puissance, et contribuant à augmenter son rendement global sur un vol.

L'ensemble de stockage d'énergie électrique ESD peut être chargé avant le décollage avec l'énergie nécessaire pour assurer la ou les fonctions. Alternativement, L'ensemble de stockage d'énergie électrique ESD peut être rechargé durant le vol en phase de croisière, phase durant laquelle les moteurs de propulsion PM sont utilisés avec un rendement optimisé.

En fonctionnement normal, la puissance électrique totale nécessaire pour les charges est prélevée sur moteur de propulsion PM par la machine électrique EM utilisée en générateur. Dans certaines phases de vol, l'avion peut demander au moteur de propulsion PM une variation brusque de poussée, ou des niveaux de poussée élevés amenant le moteur de propulsion PM en limite de sa zone de stabilité.

Dans ces phases, un organe externe à notre système (FADEC pour acronyme de "Full Authority Digital Engine Control" en langue anglaise, ou un calculateur externe) peut demander un apport de puissance électrique externe afin de limiter le prélèvement sur le moteur de propulsion PM. Le système convertisseur PEM et la machine électrique EM s'assure du transfert d'une source vers l'autre automatiquement, sans transition et interruption d'alimentation du réseau électrique.

La solution proposée permet de pouvoir passer d'un mode à l'autre naturellement, sans interruption d'alimentation du réseau. (cas 1 à cas 2)

La répartition de l'apport de puissance du PEM peut alors être pilotée par la tension réseau. L'unité de commande de génération électrique ou GCU pour acronyme de "Generator Control Unit" régule aujourd'hui la tension réseau au POR. Un organe extérieur donne une consigne de puissance au PEM, le PEM essaie d'augmenter la tension au point de régulation ou POR pour acronyme de "Point Of Regulation" jusqu'à atteindre la puissance demandée. Il fonctionne comme une source de courant. La réaction du GCU est une action pour maintenir la tension et réduire naturellement la contribution de la machine électrique EM.

A un certain point, la machine électrique EM ne fournit plus de puissance, et la force électromotrice FEM de la machine électrique EM est égale à la tension de sortie du convertisseur PEM.

Il est à noter que dans tous les cas, c'est la machine électrique EM qui impose la fréquence, le convertisseur PEM n'est qu'une source de courant suivant la tension de la machine électrique EM.

Une autre utilisation peut permettre au convertisseur PEM et à l'ensemble de stockage d'énergie électrique ESD d'alimenter le réseau électrique de l'avion lors des phases lors desquelles la propulsion est utilisée à faible puissance (phase de descente d'un avion par exemple)

Typiquement lors des phases de descente, lorsque le rendement du moteur de propulsion PM est très mauvais, la configuration proposée permet d'alimenter le réseau électrique en prenant l'énergie de l'ensemble de stockage d'énergie électrique ESD, réduisant les émissions de CO2 de l'avion.

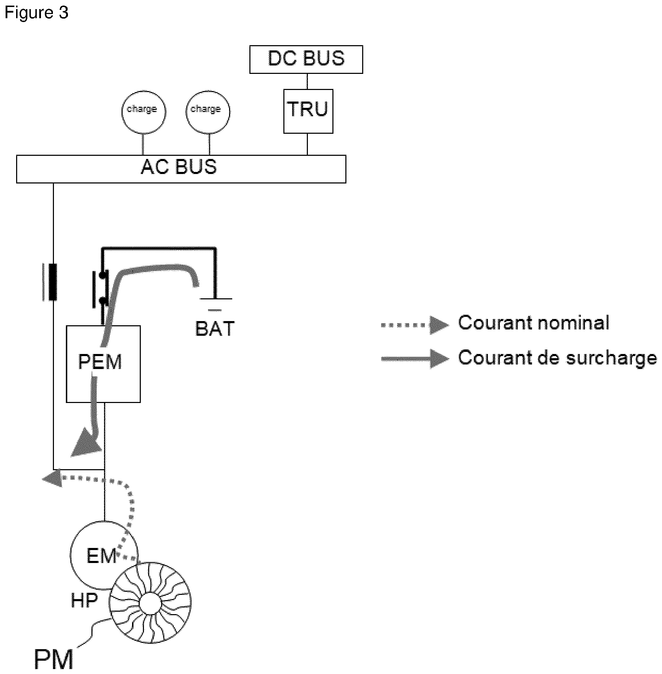

La [Fig.3] illustre l'utilisation de l'invention pour supporter le réseau pour réduire le dimensionnement de la machine électrique EM.

La machine électrique EM est dimensionnée pour fournir des surcharges temporaires, typiquement 1.25 In (In représentant le courant nominal) pendant 5 minutes, et 1.7 In pendant 5 secondes. Elle doit aussi participer à la sélectivité des protections et fournir un des courants de court-circuit typiquement de 2.5 In pendant 5s.

Le convertisseur PEM et l'ensemble de stockage d'énergie électrique ESD peuvent fournir les surcharges temporaires, permettant de dimensionner la machine électrique EM seulement sur la puissance nominale.

La régulation du convertisseur PEM s'assure que la machine électrique EM ait un courant inférieur à une limite définie, fournissant le complément pour assurer la couverture du besoin des charges, et la sélectivité des protections.

La [Fig.3] illustre la machine électrique EM limitée à son courant nominal, avec le complément fourni par le convertisseur PEM.

Dans l'exemple de la [Fig.3], la machine électrique EM peut être dimensionnée seulement sur le besoin nominal, permettant de réduire sa masse, sa taille, et son coût.

La puissance nominale d'un groupe auxiliaire de puissance APU étant définie dans des combinaisons de modes de défaillance, s'il est accepté que l'ensemble de stockage d'énergie électrique ESD puisse fournir de la puissance dans certains modes de défaillances, la machine électrique EM pourrait même être dimensionnée en-dessous de la puissance nominale définie suivant l'état de l'art actuel. Augmentant encore les gains potentiels de masse, volume et coût de la machine électrique EM.

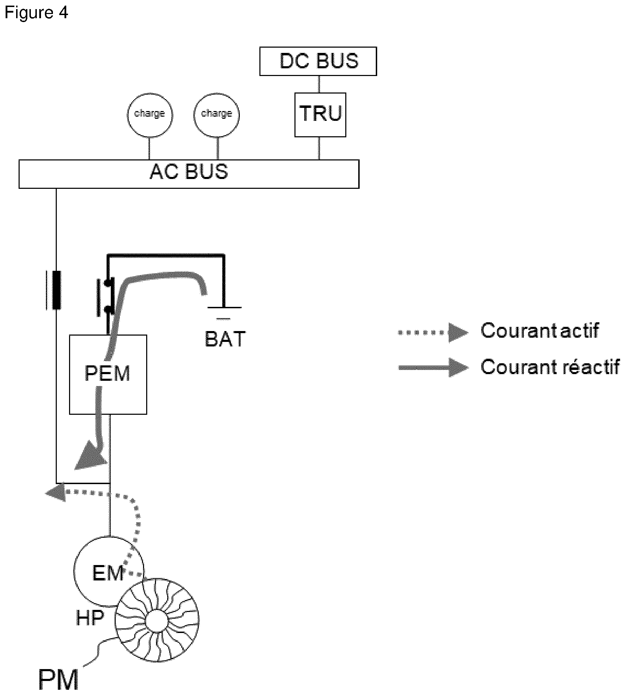

La [Fig.4] illustre une réduction du dimensionnement de la machine électrique EM grâce à la fourniture du courant réactif par le convertisseur PEM. En effet, le courant réactif de la machine impact son dimensionnement, crée des pertes, mais n'apporte aucune valeur ajoutée au système. De plus, la fourniture de courant réactif par le PEM ne consomme quasiment aucune énergie sur le stockage d'énergie.

La machine électrique EM est dimensionnée pour fournir la puissance active et la puissance réactive consommée par les charges. Le facteur de puissance demandé par les avionneurs est généralement compris entre 0.75 et 0.85%.

Sur la [Fig.4] la machine électrique EM ne fournit que le courant actif nominal. Le courant réactif est fourni par le convertisseur PEM.

Le convertisseur PEM peut fournir la puissance réactive, permettant de dimensionner la machine électrique EM seulement sur la puissance active, ce qui permet une réduction de masse de la machine électrique EM de l'ordre de 10 à 20%.

Dans une alternative de pilotage minimisant le dimensionnement du convertisseur PEM, celui-ci ne fournit du support en courant réactif seulement si le courant total de la machine électrique EM (actif + réactif) dépasse le courant nominal de la machine électrique EM. Le convertisseur PEM fonctionne alors comme un limiteur de courant pour la machine EM, avec une priorité au support en courant réactif. Si le courant actif seul devient supérieur au courant nominal de la machine électrique EM, alors le convertisseur PEM fournit aussi du courant actif.

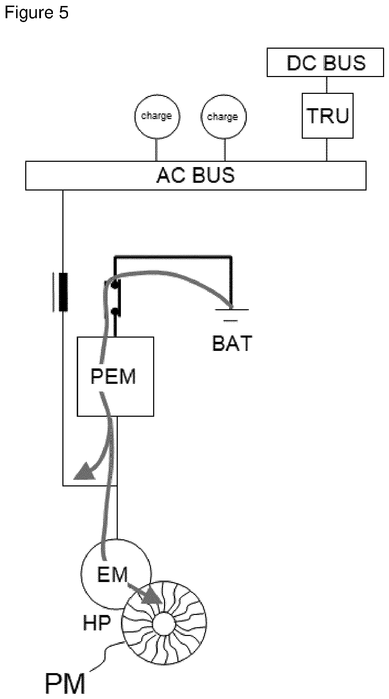

La [Fig.5] illustre une assistance au moteur de propulsion PM sur des phases transitoires, conduisant à une réduction de la puissance pic nécessaire pour l'entrainement thermique, réduisant le besoin de marge en puissance, et contribuant à réduire le dimensionnement du moteur de propulsion PM et à augmenter son rendement global sur les profils de mission.

A la demande du FADEC, la réserve d'énergie peut, entre autres, être utilisée pour assister le moteur de propulsion PM.

Si la demande d'apport de puissance est supérieure à la consommation du réseau électrique, la puissance électrique provenant l'ensemble de stockage d'énergie électrique ESD sera automatiquement transférée en partie vers la machine électrique EM qui bascule en mode moteur. La machine électrique EM entraine alors le système d'entrainement. La puissance de la machine électrique EM est bien inférieure à la puissance du système d'entrainement nécessaire pour propulser l'aéronef, et ne sera qu'un complément. Dans ce cas, on parle alors "d'assistance électrique" du système de propulsion.

Grâce à la proposition, la transition vers ce mode peut être continue, sans interruption de l'alimentation du réseau électrique. Ce mode pourra aussi être utilisé lorsque l'avion est en phase de descente. En phase de descente, le moteur de propulsion PM peut être dans différents modes : pales repliées, pales orientées dans le sens du flux d'air, mode transparent ou mode turbine. Le mode le plus utilisé et améliorant la consommation d'énergie en descente est le mode transparent. Dans ce mode de fonctionnement, le moteur de propulsion PM est entraîné à une vitesse pour laquelle la puissance propulsive devient nulle. Le propulseur est alors juste utilisé pour annuler la trainée du réacteur. Bien qu'il soit le mode le plus économe, c'est toujours l'énergie thermique du moteur de propulsion PM qui est utilisée à de très faibles puissances. A faible puissance, le rendement de l'entrainement de la propulsion est particulièrement faible, de l'ordre de 10%.

L'invention permet d'entrainer le moteur de propulsion PM dans la descente par la machine électrique EM pour assurer la transparence et alimenter toute la consommation d'énergie non propulsive grâce à l'énergie stockée dans l'ensemble de stockage d'énergie électrique ESD.

La présente invention permet en outre de réguler la tension du réseau électrique. Lors de transitoires rapides, il est souvent difficile de conserver les tensions de sortie de la machine électrique EM, utilisée dans ce cas en générateur, dans les valeurs autorisées par les normes de réseau électrique des avionneurs. Ce constat est d'autant plus vrai pour les machines électriques EM, utilisées en générateur, incluant la fonction démarrage qui nécessitent des impédances élevés. Le système proposé peut aider l'unité de commande de génération de courant GCU, pour "Generator Controler Unit" en langue anglaise, à contrôler la tension électrique au niveau du point de régulation POR.

Le convertisseur PEM suit la tension du réseau électrique avec une constante de temps définie par sa régulation, plutôt lente par rapport aux phénomènes de délestages. Sur des délestages de charge très rapides, le convertisseur PEM essaie de maintenir temporairement la tension et fournit naturellement un courant stabilisant la tension du réseau. Puis progressivement, ses régulations tendent à aligner la fourniture de courant du convertisseur PEM sur ses consignes de support ou recharge laissant le régulateur CGU de la machine électrique reprendre le relais et adapter la fourniture de puissance par la machine électrique EM au besoin du réseau.

La régulation de la machine électrique EM est facilitée, et l'ajout de composants supplémentaires pour gérer les surtensions peut être évité.

## Revendications

1. Procédé de gestion de fonctionnement d'un système d'aéronef comprenant au moins un ensemble de stockage d'énergie électrique (ESD) à alimenter en courant continu connecté à un bus d'alimentation en courant continu (DC_BUS), au moins une machine électrique (EM) source de courant alternatif par prélèvement mécanique sur un système d'entrainement connecté à une unité de commande de génération de courant (GCU), un convertisseur (PEM) bidirectionnel configuré pour convertir une tension continue en tension alternative, et un module de commande (CM) du convertisseur (PEM), le procédé de gestion étant **caractérisé en ce que**:
le procédé de gestion élabore une commande (CMD) du convertisseur (PEM) à partir de la position angulaire (θ) de la machine électrique (EM), de l'intensité (I_m) du courant électrique délivrée par la machine électrique (EM), et de la tension électrique de sortie (Vs) du convertisseur (PEM), les éléments du système étant connectés par des connexions électriques,
l'élaboration de la commande (CMD) du convertisseur (PEM) comprend les étapes suivantes:
- décomposition (1) de l'intensité électrique (I_m) du courant électrique délivré par la machine électrique (EM), en une intensité active (la_m) de la machine électrique (EM) et une intensité réactive (lr_m) de la machine électrique (EM) ;
- limitation (2) de l'intensité active (la_m) et de l'intensité réactive (lr_m) de sorte que l'intensité correspondante (I_m) du courant électrique délivré par la machine électrique (EM) soit inférieure à un seuil (I_max), par élaboration d'une consigne de limitation (Ia_lim) de l'intensité active (la_m) et d'une consigne de limitation (Ir_lim) de l'intensité réactive (Ir_m) ;
- gestion (3) de variation rapide de l'intensité (I_m) du courant électrique délivré par la machine électrique (EM), correspondant à des variations dont la constante de temps est supérieure à la constante de temps d'une fonction de transfert de type passe-haut, par élaboration d'une consigne de variation (la_réseau) de l'intensité active (la_m) et d'une consigne de variation (Ir_réseau) de l'intensité réactive (Ir_m) ;
- élaboration (4) d'une consigne (lr_ref) d'intensité réactive (lr_m) par sommation de la consigne de limitation (Ir_lim) de l'intensité réactive et de la consigne de variation (Ir_réseau) de l'intensité réactive ;
- élaboration (5) d'une consigne (la_ref) d'intensité active (Ia_m) par sommation de la consigne de limitation (Ia_lim) de l'intensité active et de la consigne de variation (la_réseau) de l'intensité active ; et
- génération (6) d'une commande du convertisseur (PEM) à partir de la consigne (la_ref) d'intensité active, de la consigne (lr_ref) d'intensité réactive, de la position angulaire (θ) de la machine électrique (EM), et de la tension électrique de sortie du convertisseur (PEM).

2. Procédé selon la revendication 1, dans lequel le seuil (I_max) est constant (I_max0) si la température (T_{EM}) de la machine électrique (EM) est inférieure ou égale à une température de seuil (Ta) à partir de laquelle la machine électrique (EM) ne peut plus fonctionner à puissance nominale, et décroissant entre la température de seuil (Ta) et une température maximale (Tmax) supportée par la machine électrique (EM).

3. Procédé selon la revendication 1 ou 2, dans lequel la consigne (la_ref) d'intensité active comprend également la sommation (5) d'une consigne d'intensité active (Ia_reac) de support au système d'entraînement élaborée (7) à partir d'une consigne de support au système d'entraînement.

4. Procédé selon l'une des revendications 1 à 3, dans lequel on affecte (8) à la consigne (la_ref) d'intensité active la valeur d'une consigne (la_stock) d'intensité de recharge de l'ensemble de stockage d'énergie électrique (ESD).

5. Procédé selon la revendication 4, dans laquelle ladite affectation a lieu lorsque la sommation pour élaborer la consigne (la_ref) d'intensité active donne une valeur nulle.

6. Procédé selon la revendication 4 ou 5, dans lequel la consigne (la_stock) de recharge est élaborée (9) à partir d'une consigne de recharge de l'ensemble de stockage d'énergie électrique (ESD) et/ou d'un niveau de charge (E_stock) de l'ensemble de stockage d'énergie électrique (ESD).

7. Procédé selon la revendication 6, dans lequel l'élaboration (9) de la consigne (la_stock) de recharge est configurée pour demander une recharge lorsque le niveau de charge (E_stock) est inférieur à un seuil.

8. Procédé selon l'une des revendications 4 à 7, dans lequel l'élaboration de la consigne (la_stock) de recharge dépend de paramètres de fonctionnement de l'ensemble de stockage d'énergie électrique (ESD).

9. Procédé selon la revendication 8, dans lequel lesdits paramètres de fonctionnement comprennent la température (T_{ESD}) de l'ensemble de stockage d'énergie électrique (ESD).

## Patentansprüche

1. Verfahren zur Betriebsverwaltung eines Luftfahrzeugsystems, umfassend mindestens eine mit Gleichstrom zu versorgende, elektrische Energiespeicheranordnung (ESD), die an einen Gleichstromversorgungsbus (DC_BUS) angeschlossen ist, mindestens eine elektrische Maschine (EM), die als Wechselstromquelle durch mechanische Entnahme auf einem Antriebssystem dient, das mit einer Stromerzeugungssteuereinheit (GCU) verbunden ist, einen bidirektionalen Wandler (PEM), der so konfiguriert ist, dass er eine Gleichspannung in eine Wechselspannung umwandelt, und ein Steuermodul (CM) des Wandlers (PEM), wobei das Verwaltungsverfahren **dadurch gekennzeichnet ist, dass**:
das Verwaltungsverfahren eine Steuerung (CMD) des Wandlers (PEM) aus der Winkelposition (θ) der elektrischen Maschine (EM), der Stromstärke (I_m) des von der elektrischen Maschine (EM) gelieferten elektrischen Stroms und der elektrischen Ausgangsspannung (Vs) des Wandlers (PEM) erstellt, wobei die Elemente des Systems durch elektrische Verbindungen verbunden sind, die Erstellung der Steuerung (CMD) des Wandlers (PEM) die folgenden Schritte umfasst:
- Zerlegung (1) der elektrischen Stromstärke (I_m) des von der elektrischen Maschine (EM) gelieferten elektrischen Stroms in eine Wirkstromstärke (Ia_m) der elektrischen Maschine (EM) und eine Blindstromstärke (Ir_m) der elektrischen Maschine (EM);
- Begrenzung (2) der Wirkstromstärke (Ia_m) und der Blindstromstärke (Ir_m), sodass die entsprechende Stromstärke (I_m) des von der elektrischen Maschine (EM) gelieferten elektrischen Stroms kleiner als ein Schwellenwert (I_max) ist, durch Erstellung eines Begrenzungssollwerts (Ia_lim) für die Wirkstromstärke (Ia_m) und eines Begrenzungssollwerts (Ir_lim) für die Blindstromstärke (Ir_m);
- Verwaltung (3) einer schnellen Variation der Stromstärke (I_m) des von der elektrischen Maschine (EM) gelieferten elektrischen Stroms, die Variationen entspricht, deren Zeitkonstante größer ist als die Zeitkonstante einer Übertragungsfunktion vom Typ Hochpass, durch Erstellung eines Variationssollwerts (Ia_réseau) der Wirkstromstärke (Ia_m) und eines Variationssollwerts (Ir_réseau) der Blindstromstärke (Ir_m) ;
- Erstellung (4) eines Sollwerts (Ir_ref) der Blindstromstärke (Ir_m) durch Summierung des Begrenzungssollwerts (Ir_lim) der Blindstromstärke und des Variationssollwerts (Ir_réseau) der Blindstromstärke;
- Erstellung (5) eines Sollwerts (Ia_ref) der Wirkstromstärke (Ia_m) durch Summierung des Begrenzungssollwerts (Ia_lim) der Wirkstromstärke und des Variationssollwerts (Ia_réseau) der Wirkstromstärke; und
- Erzeugung (6) einer Steuerung des Wandlers (PEM) aus dem Sollwert (Ia_ref) der Wirkstromstärke, dem Sollwert (Ir_ref) der Blindstromstärke, der Winkelposition (θ) der elektrischen Maschine (EM) und der elektrischen Ausgangsspannung des Wandlers (PEM).

2. Verfahren nach Anspruch 1, wobei der Schwellenwert (I_max) konstant (I_max0) ist, wenn die Temperatur (T_{EM}) der elektrischen Maschine (EM) kleiner als eine oder gleich einer Schwellentemperatur (Ta) ist, ab der die elektrische Maschine (EM) nicht mehr mit Nennleistung betrieben werden kann, und zwischen der Schwellentemperatur (Ta) und einer maximalen Temperatur (Tmax), die von der elektrischen Maschine (EM) ausgehalten wird, abnimmt.

3. Verfahren nach Anspruch 1 oder 2, wobei der Sollwert (Ia_ref) der Wirkstromstärke auch die Summierung (5) eines aus einem Antriebssystem-Unterstützungs-Sollwert erstellten (7) Antriebssystem-Unterstützungs-Wirkstrom-Sollwerts (Ia_reac) umfasst.

4. Verfahren nach einem der Ansprüche 1 bis 3, wobei dem Sollwert (Ia_ref) der Wirkstromstärke der Wert eines Sollwerts (Ia_stock) der Aufladestromstärke der elektrischen Energiespeicheranordnung (ESD) zugewiesen wird (8).

5. Verfahren nach Anspruch 4, wobei die Zuweisung stattfindet, wenn die Summierung zum Erstellen des Sollwerts (Ia_ref) der Wirkstromstärke einen Wert gleich null ergibt.

6. Verfahren nach Anspruch 4 oder 5, wobei der Aufladesollwert (Ia stock) anhand eines Aufladesollwerts der elektrischen Energiespeicheranordnung (ESD) und/oder eines Ladezustands (E stock) der elektrischen Energiespeicheranordnung (ESD) erstellt wird (9).

7. Verfahren nach Anspruch 6, wobei die Erstellung (9) des Aufladesollwerts (Ia stock) so konfiguriert ist, dass sie ein Aufladen anfordert, wenn der Ladezustand (E_stock) unterhalb eines Schwellenwerts liegt.

8. Verfahren nach einem der Ansprüche 4 bis 7, wobei die Erstellung des Aufladesollwerts (Ia_stock) von Betriebsparametern der elektrischen Energiespeicheranordnung (ESD) abhängt.

9. Verfahren nach Anspruch 8, wobei die Betriebsparameter die Temperatur (T_{ESD}) der elektrischen Energiespeicheranordnung (ESD) umfassen.

## Claims

1. A method for managing operation of an aircraft system comprising at least one electrical energy storage assembly (ESD) to supply with direct current connected to a direct current power supply bus (DC_BUS), at least one electrical machine (EM) being an alternative current source through mechanical draw on a drive system connected to a current generation control unit (GCU), a bidirectional converter (PEM) configured to convert DC voltage into AC voltage, and a control module (CM) for the converter (PEM), the management method being **characterised in that**:
the management method formulates a command (CMD) for the converter (PEM) from the angular position (θ) of the electrical machine (EM), from the intensity (I_m) of the electrical current delivered by the electrical machine (EM), and from the output electrical voltage (Vs) of the converter (PEM), the elements of the system being connected by electrical connections, the formulation of the command (CMD) for the converter (PEM) comprises the following steps:
- breakdown (1) of the electrical intensity (I_m) of the electrical current delivered by the electrical machine (EM), into an active intensity (Ia_m) of the electrical machine (EM) and a reactive intensity (Ir_m) of the electrical machine (EM);
- limitation (2) of the active intensity (Ia_m) and of the reactive intensity (Ir_m) such that the corresponding intensity (I_m) of the electrical current delivered by the electrical machine (EM) is lower than a threshold (I_max), by formulation of a limitation setpoint (Ia_lim) of the active intensity (Ia_m) and of a limitation setpoint (Ir_lim) of the reactive intensity (Ir_m);
- management (3) of rapid variation of the intensity (I_m) of the electrical current delivered by the electrical machine (EM), corresponding to variations, of which the time constant is greater than the time constant of a transfer function of high-pass type, by formulation of a variation setpoint (Ia_réseau) of the active intensity (Ia_m) and of a variation setpoint (Ir_réseau) of the reactive intensity (Ir_m);
- formulation (4) of a reactive intensity (Ir_m) setpoint (Ir_ref) by summation of the limitation setpoint (Ir_lim) of the reactive intensity and of the variation setpoint (Ir_réseau) of the reactive intensity;
- formulation (5) of an active intensity (Ia_m) setpoint (Ia_ref) by summation of the limitation setpoint (Ia_lim) of the active intensity and of the variation setpoint (Ia_réseau) of the active intensity; and
- generation (6) of a command for the converter (PEM) from the active intensity setpoint (Ia_ref), from the reactive intensity setpoint (Ir _ref), from the angular position (θ) of the electrical machine (EM), and from the output electrical voltage of the converter (PEM).

2. The method according to claim 1, wherein the threshold (I_max) is constant (I_max0) if the temperature (T_{EM}) of the electrical machine (EM) is less than or equal to a threshold temperature (Ta) from which the electrical machine (EM) can no longer operate at nominal power, and decreasing between the threshold temperature (Ta) and a maximum temperature (Tmax) supported by the electrical machine (EM).

3. The method according to claim 1 or 2, wherein the active intensity setpoint (Ia_ref) also comprises the summation (5) of a drive system support active intensity setpoint (Ia_reac) formulated (7) from a drive system support setpoint.

4. The method according to one of claims 1 to 3, wherein the active intensity setpoint (Ia_ref) is assigned (8) the value of a recharge intensity setpoint (Ia_stock) of the electrical energy storage assembly (ESD).

5. The method according to claim 4, wherein said assignment takes place when the summation to formulate the active intensity setpoint (Ia_ref) gives a null value.

6. The method according to claim 4 or 5, wherein the recharge setpoint (Ia stock) is formulated (9) from a recharge setpoint of the electrical energy storage assembly (ESD) and/or from a level of charge (E stock) of the electrical energy storage assembly (ESD).

7. The method according to claim 6, wherein the formulation (9) of the recharge setpoint (Ia stock) is configured to request a recharge when the level of charge (E stock) is lower than a threshold.

8. The method according to one of claims 4 to 7, wherein the formulation of the recharge setpoint (Ia stock) depends on operating parameters of the electrical energy storage assembly (ESD).

9. The method according to claim 8, wherein said operating parameters comprise the temperature (T_{ESD}) of the electrical energy storage assembly (ESD).
